# EUROPÄISCHE PATENTSCHRIFT

(11) **EP 2 522 632 B1**
(45) Veröffentlichungstag und Bekanntmachung des Hinweises auf die Patenterteilung: **01.10.2014**
(21) Anmeldenummer: 11401520.9
(22) Anmeldetag: 12.05.2011
(51) Int. Cl.: C02F 1/04, C02F 1/20, C02F 101/38, C02F 103/40

(54) **Verfahren zum Reduzieren und zur Reinigung von Thioharnstoff enthaltendem Prozessabwasser**
Method for reducing and cleaning process waste water containing thiourea
Procédé de réduction et de nettoyage d'eau de traitement contenant de la thio-urée

(43) Veröffentlichungstag der Anmeldung: 14.11.2012
(73) Patentinhaber: Kopf Holding GmbH, 72172 Sulz-Bergfelden (DE)
(72) Erfinder: Schmid, Jürgen, 78628 Rottweil (DE)
(74) Vertreter: Späth, Dieter

(56) Entgegenhaltungen:
- Schuler, Steffen: "Entwicklung von Heterosolarzellen mit CuGa Se2-Absorbern", Transporteigenschaften und Defekte in polykristallinen CuGaSe2-Schichten und Heterostrukturen, Nr. 4 16. Dezember 2002 (2002-12-16), Seiten 39-45, XP002659697, FU Berlin Gefunden im Internet: URL:http://www.diss.fu-berlin.de/diss/serv lets/MCRFileNodeServlet/FUDISS_derivate_00 0000000804/05_prozess.pdf;jsessionid=98FBF A7C386706EEEBD1BCD4CF00F973?hosts= [gefunden am 2011-09-22]
- William H. R. Shaw ET AL: "The decomposition of Thiourea in Water Solutions", Journal of the American Chemical Society, vol. 78, no. 22, 20 November 1956 (1956-11-20), pages 5769-5772, XP055048998, ISSN: 0002-7863, DOI: 10.1021/ja01603a014

## Beschreibung

Die Erfindung betrifft ein Verfahren zum Reduzieren und zur Reinigung von Thioharnstoff enthaltendem Prozessabwasser mit den Merkmalen des Oberbegriffs des Anspruchs 1.

Thioharnstoff findet Verwendung als Komplexbildner zum nasschemischen Abscheiden von Schichten, beispielsweise einer CdS-Pufferschicht (auf ein Substrat verwendet). Beispielsweise beschreibt der Artikel "Entwicklung von Heterosolarzellen mit CuGaSe₂-Absorbern von Steffen Schuler in einer Dissertation an der FU Berlin auf Seiten 39 bis 45 die Abscheidung einer CdS-Pufferschicht und einer CuGaSe₂-Absorberschicht auf einem Substrat zur Herstellung von Solarzellen. Dabei dient Thioharnstoff als Schwefelquelle. Der Thioharnstoff ist in einer wässrigen Abscheidelösung enthalten, die als Prozess(brauch)wasser aufgefasst werden kann. Ist die Abscheidelösung verbraucht muss sie als Prozessabwasser entsorgt werden. Es ist davon auszugehen, dass die Abscheidelösung, auch wenn sie verbraucht ist, immer noch Thioharnstoff enthält, der entsorgt werden muss. Der Thioharnstoff ist in einer wässrigen Lösung enthalten, die als Prozesswasser und bei einer Entsorgung als Prozessabwasser bezeichnet werden kann. Die Erfindung ist allerdings nicht auf Prozessabwasser aus der Herstellung von beispielsweise einer CdS-Pufferschicht beschränkt, sondern bezieht sich allgemein auf die Reinigung von Prozessabwasser das Thioharnstoff enthält. Außer Thioharnstoff enthält das Prozessabwasser normalerweise weitere Substanzen wie Ammoniak und Cadmiumsulfid, wobei es hier vorwiegend um den Thioharnstoff geht, eine Möglichkeit zur Reinigung des Prozessabwassers von Ammoniak ist ebenfalls angegeben, die Reinigung des Prozessabwassers von anderen Substanzen lässt die Erfindung offen.

Um das Volumen zu verkleinern wird das Prozessabwasservolumen reduziert, d. h. ein Teil des Wassers wird verdampft. Die im Prozessabwasser enthaltenen Substanzen bleiben im nicht verdampften Prozessabwasser, ihre Konzentration ist proportional zur verringerten Wassermenge entsprechend erhöht. Beim Erwärmen des Prozessabwassers zum Verdampfen kann sich der Thioharnstoff zersetzen in Ammoniak, Schwefelwasserstoff und seine disoziierten Bestandteile. Das erfindungsgemäße Verfahren mit den Merkmalen des Anspruchs 1 sieht vor, den Schwefelwasserstoff und den Ammoniak chemisch zu binden oder die dissoziierten Bestandteile mit einem Fällungsmittel zu fällen. Der an das Fällungsmittel gebundene Schwefelwasserstoff oder seine disoziierten Bestandteile oder der an das Fällungsmittel gebundene Ammoniak können mit dem Fällungsmittel mit dem Prozessabwasser entfernt, durch Filtern oder in anderer Weise vom Prozessabwasser getrennt und entsorgt werden oder im Prozesswasser verbleiben und mit diesem zusammen entsorgt werden. Der Thioharnstoff zersetzt sich nicht immer in Ammoniak und Schwefelwasserstoff. Das Fällungsmittel kann dem Prozessabwasser vorsorglich immer zugegeben werden oder nur dann, wenn Schwefelwasserstoff, Ammoniak oder nur einer der beiden Stoffe, entsteht.

Eine Ausgestaltung der Erfindung sieht ein Verdampfen des Prozessabwassers bei Unterdruck vor, also bei einem im Vergleich zu Umgebungs- oder Normaldruck verringerten Druck. Der Unterdruck senkt die Verdampfungstemperatur und verkleinert die Verdampfungswärme. Das hat den Vorteil, dass sich die zum Verdampfen notwendige Energie verringert.

Eine Ausgestaltung der Erfindung sieht einen Batchbetrieb vor, d. h. ein Volumen des Prozessabwassers wird in einen Unterdruckverdampfer eingeschlossen und bei Unterdruck reduziert, d. h. teilweise verdampft, wobei die Konzentration der im Prozessabwasser enthaltenen Substanzen steigt und sich der Thioharnstoff in Ammoniak und Schwefelwasserstoff zersetzen kann.

Das Fällungsmittel wird dem Prozessabwasser vorzugsweise vor dem Verdampfen zugesetzt. Es reagiert erst mit dem Schwefelwasserstoff oder mit dem Ammoniak oder beiden Stoffen, wenn diese entstehen, d. h. wenn sich der Thioharnstoff zersetzt. Als Fällungsmittel eignen sich Metallsalze, insbesondere sieht eine Ausgestaltung der Erfindung Eisensulfat als Fällungsmittel vor, da dieses vorteilhaft beide bei der Thioharnstoffzersetzung entstehenden Spaltprodukte nämlich Schwefelwasserstoff und den Ammoniak bindet.

Ammoniak wird gemäß einer Ausgestaltung der Erfindung durch Strippen (Desorption) aus dem Prozessabwasser entfernt. Das Strippen wird gelegentlich auch als Ausblasen bezeichnet. Es kann sowohl Ammoniak, das bereits im Prozessabwasser enthalten ist, als auch Ammoniak, der entsteht, wenn sich der Thioharnstoff zersetzt, durch Strippen aus dem Prozessabwasser entfernt werden.

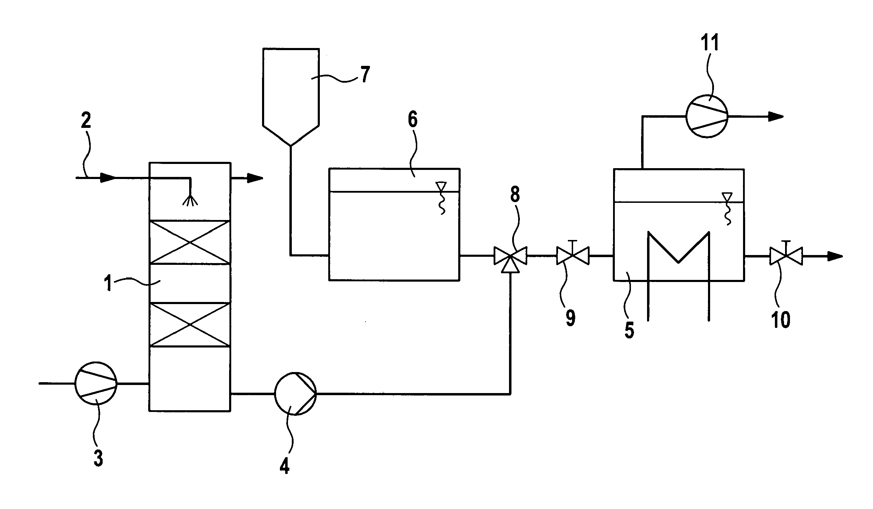

Die Erfindung wird nachfolgend anhand eines in der Zeichnung dargestellten Ausführungsbeispiels näher erläutert. Die einzige Figur zeigt einen Schaltplan einer Anlage zur Durchführung des erfindungsgemäßen Verfahrens. Die Zeichnung ist als vereinfachte und schematisierte Darstellung zum Verständnis und zur Erläuterung der Erfindung zu verstehen.

Die in der Zeichnung dargestellte Anlage dient zum Reduzieren und zur Reinigung von Thioharnstoff enthaltendem Prozessabwasser. Das Prozessabwasser stammt beispielsweise von der Herstellung von Dünnschichtsolarzellen und enthält u. a. Thioharnstoff und Ammoniak in wässriger Lösung. Die Anlage weist eine Strippkolonne 1 oder sonstige Einrichtung zum Strippen des Prozessabwassers auf. Das Prozessabwasser tritt bei 2 mit einer Temperatur von beispielsweise 40°C oder mehr in die Strippkolonne 1 ein. Das Ammoniak wird durch Strippen mit Luft oder Dampf aus dem Prozessabwasser entfernt. Die Luft wird mit einem Verdichter 3 in die Strippkolonne 1 geblasen oder gesaugt und entfernt das Ammoniak im Gegenstrom aus dem Prozessabwasser. Nach dem Austritt muss die (Ab-)Luft oder der Dampf von Ammoniak gereinigt werden.

Nach dem Strippen in der Strippkolonne 1 wird das ammoniakfreie Prozessabwasser (es kann einen geringen Ammoniakanteil enthalten) mit einer Pumpe in einen Unterdruckverdampfer 5 gefördert. Vor dem Unterdruckverdampfer 5 wird dem Prozessabwasser Wasser aus einem Vorlagebehälter 6 zugeführt, dem Eisen(II)- oder Eisen(III)-salze aus einem Vorratsbehälter 7 zugegeben worden ist. Das Wasser mit dem gelösten Eisensalz oder das pulverförmige Eisensalz a aus dem Vorlagebehälter 6 wird dem Prozessabwasser aus der Strippkolonne 1 vor einem Zulauf zum Unterdruckverdampfer 5 mit einem Dosierventil 8 volumenstromproportional oder direkt in den Unterdruckverdampfer 5 zudosiert..

Der Unterdruckverdampfer 5 wird im Batchbetrieb betrieben, d. h. ihm wird eine Füllmenge, die sich von Mal zu Mal ändern kann, zugeführt und zum Reduzieren im Unterdruckverdampfer 5 eingeschlossen. Nach dem Schließen von Ventilen 9, 10 an einem Ein- und einem Auslass des Unterdruckverdampfers 5 wird mit einem Verdichtergebläse 11 ein Druck im Unterdruckverdampfer 5 abgesenkt auf beispielsweise etwa 500 mbar, also auf einen Unterdruck. Das zunächst ammoniakfreie Prozessabwasser wird im Unterdruckverdampfer 5 erwärmt und dadurch teilweise verdampft. Durch das Verdampfen wird das Volumen des Prozessabwasser verringert, d. h. das Prozessabwasservolumen wird reduziert. Das Wasser im Unterdruckverdampfer 5 wird über einen Zeitraum von beispielsweise etwa 15 Stunden von beispielsweise etwa 60 °C auf beispielsweise etwa 85 °C erwärmt. Das Wasservolumen im Unterdruckverdampfer 5 wird um beispielsweise den Faktor 1:40 reduziert. Die Konzentration im Wasser enthaltener Substanzen erhöht sich entsprechend.

Ab einer Temperatur von etwa 70 °C kann sich Thioharnstoff, der im Prozessabwasser enthalten ist, zersetzen in Ammoniak und Schwefelwasserstoff. Schwefelwasserstoff wird mit dem Eisensalz als Fällungsmittel, welches mit dem Wasser aus dem Vorlagebehälter 6 dem Prozessabwasser vor dem Unterdruckverdampfer 5 zudosiert worden ist, gefällt und nach Beendigung des Reduzierens mit dem im Unterdruckverdampfer 5 verbliebenen, aufkonzentriertem Prozesswasser aus dem Unterdruckverdampfer 5 abgelassen. Der an das Fällungsmittel gebundene Schwefelwasserstoff kann nach dem Ablassen aus dem Unterdruckverdampfer 5 durch Filtern aus dem Prozessabwasser entfernt werden.

Weil das Prozessabwasser im Unterdruckverdampfer 5 zunächst ammoniakfrei ist (oder allenfalls eine geringe Ammoniakkonzentration enthält), kann es das Ammoniak, das entsteht, wenn sich der Thioharnstoff ab einer Temperatur von etwa 70°C zersetzt, lösen. Nach Beendigung des Reduzierens und Ablassen des Prozessabwassers aus dem Unterdruckverdampfer 5 kann das Prozessabwasser erneut von Ammoniak gereinigt werden. Die Reinigung des Prozessabwassers von Ammoniak kann wie vor dem Reduzieren durch Strippen erfolgen (nicht dargestellt).

Das erfindungsgemäße Verfahren ermöglicht auch eine Reinigung von Prozessabwasser von Harnstoff.

## Patentansprüche

1. Verfahren zum Reduzieren und zur Reinigung von Thioharnstoff enthaltendem Prozessabwasser, das durch Verdampfen reduziert wird, **dadurch gekennzeichnet, dass** Schwefelwasserstoff, der entsteht, wenn sich der Thioharnstoff beim Verdampfen des Prozessabwassers zersetzt, mit einem Fällungsmittel gefällt wird.

2. Verfahren nach Anspruch 1, **dadurch gekennzeichnet, dass** das Prozessabwasser bei Unterdruck verdampft wird.

3. Verfahren nach Anspruch 1 oder 2, **dadurch gekennzeichnet, dass** das Prozessabwasser in einem Batchbetrieb verdampft wird.

4. Verfahren nach einem der Ansprüche 1 bis 3, **dadurch gekennzeichnet, dass** das Fällungsmittel dem Prozessabwasser vor dem Verdampfen zugesetzt wird.

5. Verfahren nach einem der Ansprüche 1 bis 4, **dadurch gekennzeichnet, dass** das Fällungsmittel ein Metallsalz ist.

6. Verfahren nach Anspruch 5, **dadurch gekennzeichnet, dass** das Fällungsmittel ein Eisensulfat ist.

7. Verfahren nach einem der vorhergehenden Ansprüche, **dadurch gekennzeichnet, dass** das Prozessabwasser von der Herstellung von Dünnschichtsolarzellen stammt, wo der Thioharnstoff in einem Prozesswasser als Komplexbildner zur nasschemischen Abscheidung einer Schicht auf ein Substrat dient.

8. Verfahren nach einem der vorhergehenden Ansprüche, **dadurch gekennzeichnet, dass** Ammoniak vor dem Reduzieren aus dem Prozessabwasser entfernt wird.

9. Verfahren nach einem der vorhergehenden Ansprüche, **dadurch gekennzeichnet, dass** Ammoniak nach dem Reduzieren aus dem Prozessabwasser entfernt wird.

10. Verfahren nach Anspruch 8 oder 9, **dadurch gekennzeichnet, dass** das Ammoniak durch Strippen aus dem Prozessabwasser entfernt wird.

## Claims

1. Method for the reduction and purification of process waste water containing thiourea, which is reduced by evaporation, **characterised in that** hydrogen sulphide, which arises when the thiourea decomposes upon evaporation of the process waste water, is precipitated with a precipitation agent.

2. Method according to claim 1, **characterised in that** the process waste water is evaporated at negative pressure.

3. Method according to claim 1 or 2, **characterised in that** the process waste water is evaporated in batch processing.

4. Method according to one of claims 1 to 3, **characterised in that** the precipitation agent is added to the process waste water before evaporation.

5. Method according to one of claims 1 to 4, **characterised in that** the precipitation agent is a metal salt.

6. Method according to claim 5, **characterised in that** the precipitation agent is an iron sulphate.

7. Method according to one of the preceding claims, **characterised in that** the process waste water originates from the production of thin film solar cells, wherein the thiourea serves, in process water, as a complexing agent for the wet chemical deposition of a layer onto a substrate.

8. Method according to one of the preceding claims, **characterised in that** ammonia is removed from the process waste water before the reduction.

9. Method according to one of the preceding claims, **characterised in that** ammonia is removed from the process waste water after the reduction.

10. Method according to claim 8 or 9, **characterised in that** the ammonia is removed from the process waste water by stripping.

## Revendications

1. Procédé de réduction et de purification d'eaux usées industrielles contenant de la thio-urée qui sont réduites par évaporation, **caractérisé en ce que** l'hydrogène sulfuré qui se forme lorsque la thio-urée se décompose lors de l'évaporation des eaux usées industrielles est précipité avec un agent précipitant.

2. Procédé selon la revendication 1, **caractérisé en ce que** les eaux usées industrielles sont évaporées sous pression négative.

3. Procédé selon la revendication 1 ou 2, **caractérisé en ce que** les eaux usées industrielles sont évaporées dans un traitement par lots.

4. Procédé selon l'une des revendications 1 à 3, **caractérisé en ce que** l'agent précipitant est ajouté aux eaux usées industrielles avant l'évaporation.

5. Procédé selon l'une des revendications 1 à 4, **caractérisé en ce que** l'agent précipitant est un sel métallique.

6. Procédé selon la revendication 5, **caractérisé en ce que** l'agent précipitant est un sulfate de fer.

7. Procédé selon l'une des revendications précédentes, **caractérisé en ce que** les eaux usées industrielles proviennent de la fabrication de cellules solaires en couches minces, où la thio-urée contenue dans les eaux usées industrielles sert d'agent complexant pour le dépôt par voie humide d'une couche sur un substrat.

8. Procédé selon l'une des revendications précédentes, **caractérisé en ce que** l'ammoniac est éliminé des eaux usées industrielles avant la réduction.

9. Procédé selon l'une des revendications précédentes, **caractérisé en ce que** l'ammoniac est éliminé des eaux usées industrielles après la réduction.

10. Procédé selon la revendication 8 ou 9, **caractérisé en ce que** l'ammoniac est éliminé des eaux usées industrielles par stripage.
